(19) **Europäisches Patentamt / European Patent Office / Office européen des brevets**

(11) **EP 3 441 930 A1**

(12) # EUROPEAN PATENT APPLICATION

(43) Date of publication:
**13.02.2019 Bulletin 2019/07**

(21) Application number: **17197385.2**

(22) Date of filing: **19.10.2017**

(51) Int Cl.:
**G06Q 40/02** *(2012.01)*     **G06Q 20/10** *(2012.01)*
**G06Q 10/06** *(2012.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority:  **10.08.2017   RU 2017128538**
            **05.09.2017   US 201715695253**

(71) Applicant: **AO Kaspersky Lab**
**Moscow 125212 (RU)**

(72) Inventors:
• **SKVORTSOV, Vladimir A.**
  **125212 MOSCOW (RU)**
• **KOLOTINSKY, Evgeny B.**
  **125212 MOSCOW (RU)**

(74) Representative: **Chimini, Francesco**
**Jacobacci & Partners S.p.A.**
**Piazza della Vittoria 11**
**25122 Brescia (IT)**

(54) **SYSTEM AND METHOD OF IDENTIFYING POTENTIALLY DANGEROUS DEVICES DURING THE INTERACTION OF A USER WITH BANKING SERVICES**

(57)    Disclosed are systems and methods for identifying potentially dangerous devices during the interaction of a user with banking services. When there are interactions between a user's device(s) and banking services, the described technique acquires a digital fingerprint of the user device. That digital fingerprint indicates at least one characteristic of the user device. Clusters associated with the user device are created based on the at least one characteristic of the user device. Each cluster is associated with a corresponding threat degree. In response to determining that the user device is a threat risk based on the one or more generated clusters, transactions being carried out between the user device and the banking services may be blocked.

Fig. 1

**Description**

**FIELD OF TECHNOLOGY**

The present disclosure relates generally to the field of computer security, more specifically to systems and methods of identifying potentially dangerous devices during the interaction of a user with banking services.

**BACKGROUND**

At present, the realm of banking services has expanded significantly. The user (bank customer) is presented with new possibilities for interacting with the bank and new methods of payment and transfer of funds. A multitude of payment systems, plastic cards, and banking services (bank services are often called remote banking services) allow the user to perform various transactions by means of computing devices. Online and mobile banking are making it possible to carry out monetary transactions without the use of a plastic card or bank account details.

Moreover, various mechanisms exist for protecting the user's resources against access by third parties. When the user is working with online banking, a method such as two-factor authentication is often used. After entering the authentication data (such as a login and password, which might become accessible to third parties) in the browser at the bank site, the bank sends the user on their mobile telephone a message containing, for example, an additional verification code, which needs to be entered in a special field.

However, it should be noted that there are many attacks which employ vulnerable aspects in the interaction of the user with banking services, which are carried out by hackers in order to gain access to the user's funds. Such attacks are often called fraud. Thus, for example, with the aid of phishing sites it is possible to obtain the login and password for access to online banking. Malicious software for mobile devices allows hackers to conduct transactions with confirmation of which the user is unaware.

Systems and methods are known which use a so-called fingerprint of the user's device for protecting the user from fraudulent activity. The user in the general case uses the same devices, each device containing a particular set of software and attributes which are known to the bank. If the software set is changed on the device, or if the device itself is changed, there is a high probability that fraudulent activity is occurring. When fraudulent activity is carried out on a device, that device is then considered to be dangerous.

However, identical devices in different regions employ a different set of programs, firmware, and browsers for access to online banking. The known systems and methods of comparing fingerprints of devices only identify a certain number of dangerous devices, but are not able to identify potentially dangerous devices in dependence on different characteristics (such as the region of use of the device or the regional firmware of the device), nor are they able to identify devices if the fingerprint of such a device is not yet known (for example, a new device in the manufacturer's product line) and they do not make use of the expertise of firms engaging in the development of programs to ensure security (such as antivirus software).

SUMMARY

Thus, a system and method is disclosed herein for ensuring a safe interaction of a user with banking services, and more particularly, identifying potentially dangerous devices during the interaction of a user with banking services.
In one example, a method for identifying potentially dangerous devices during the interaction of a user with banking services comprises: responsive to detecting an interaction between a user device and banking services, acquiring a digital fingerprint associated with the user device, wherein the digital fingerprint indicates at least one characteristic of the user device; generating one or more clusters associated with the user device based on the at least one characteristic of the user device, wherein each cluster is associated with a corresponding threat degree; and responsive to determining that the user device is a threat risk based on the one or more generated clusters, blocking a transaction being carried out between the user device and the banking services during the interaction.
In one example, a method further comprises: acquiring data related to threat risk states associated with the user device.
In one example, a method further comprises: calculating each threat degree associated with a corresponding cluster of the one or more clusters, wherein each threat degree indicates a numerical quantity proportional to a frequency of occurrence of a threat risk state.
In one example, determining that the user device is a threat risk based on the one or more generated clusters further comprises: determining that the user device is associated with at least two clusters with threat degrees exceeding a threshold value.
In one example, determining that the user device is a threat risk based on the one or more generated clusters further comprises: determining a first threat degree of a first cluster of the generated clusters; determining a second threat degree of a second cluster of the generated clusters; and determining that an average of the first and second threat degrees exceeds the threshold value, wherein the first threat degree does not individually exceed the threshold value.

In one example, a method further comprises: the first and second clusters are generated by clusterization of different characteristics of the user device.

In one example, a method further comprises: determining that the user device is a threat risk based on the one or more generated clusters further comprises: determining that an average of a product of a first threat degree and an associated weight value and a product of a second threat and an associated weight value exceeds the threshold value.

In one example, a system for identifying potentially dangerous devices during the interaction of a user with banking services comprises: a storage device for storing a database; and a hardware processor configured to: responsive to detecting an interaction between a user device and banking services, acquire a digital fingerprint associated with the user device, wherein the digital fingerprint indicates at least one characteristic of the user device; generate one or more clusters associated with the user device based on the at least one characteristic of the user device, wherein each cluster is associated with a corresponding threat degree; and responsive to determining that the user device is a threat risk based on the one or more generated clusters, block a transaction being carried out between the user device and the banking services during the interaction.

The above simplified summary of example aspects serves to provide a basic understanding of the present disclosure. This summary is not an extensive overview of all contemplated aspects, and is intended to neither identify key or critical elements of all aspects nor delineate the scope of any or all aspects of the present disclosure. Its sole purpose is to present one or more aspects in a simplified form as a prelude to the more detailed description of the disclosure that follows. To the accomplishment of the foregoing, the one or more aspects of the present disclosure include the features described and exemplarily pointed out in the claims.

## BRIEF DESCRIPTION OF THE DRAWINGS

The accompanying drawings, which are incorporated into and constitute a part of this specification, illustrate one or more example aspects of the present disclosure and, together with the detailed description, serve to explain their principles and implementations.

**Fig. 1** is a block diagram illustrating a system for identification of potentially dangerous devices.

**Fig. 2** is a flowchart illustrating a method for identification of potentially dangerous devices.

**Fig. 3** shows an example of a general-purpose computer system on which the present invention may be implemented.

## DETAILED DESCRIPTION

Exemplary aspects are described herein in the context of a system, method and computer program product for identification of potentially dangerous devices. Those of ordinary skill in the art will realize that the following description is illustrative only and is not intended to be in any way limiting. Other aspects will readily suggest themselves to those skilled in the art having the benefit of this disclosure. Reference will now be made in detail to implementations of the example aspects as illustrated in the accompanying drawings. The same reference indicators will be used to the extent possible throughout the drawings and the following description to refer to the same or like items.

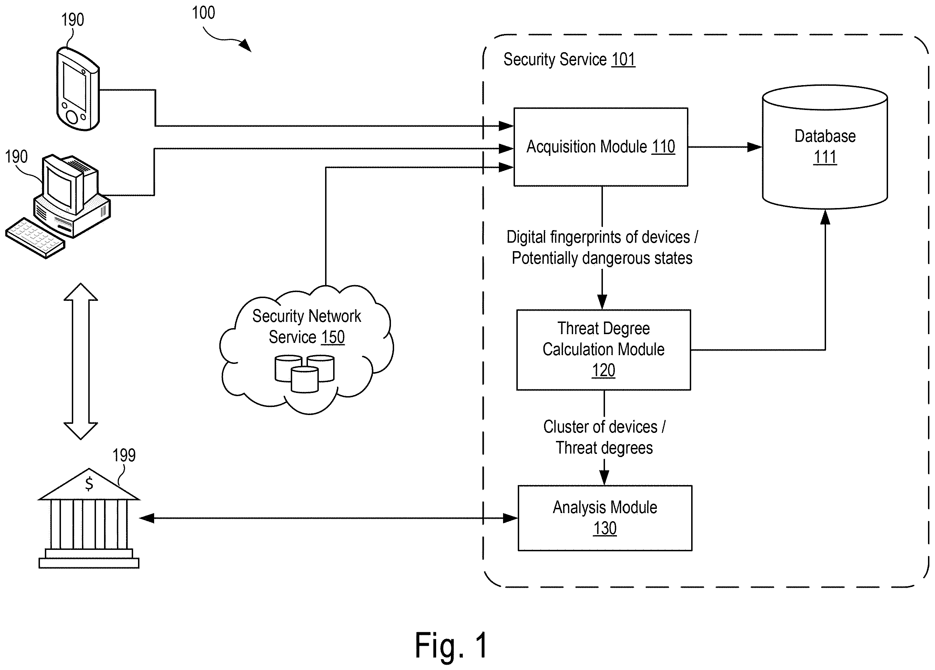

**Fig. 1** is a block diagram illustrating a system **100** for identification of potentially dangerous devices. The system **100** is configured to identify potentially dangerous devices **190** during online access to banking services **199**. The system **100** may include a security service **101** having an acquisition module **110,** a threat degree calculating module **120,** and an analysis module **130.**

The device **190** in the context of the present disclosure is a software execution environment which is implemented on a computing device. For example, the device 190 may include a web browser application executing on a computer, for accessing a website provided by the banking service **199**. In another example, the device **190** may include a bank application executing on a mobile device (e.g., smartphone, tablet) configured to accessing banking services **199.**

As referred to herein, a potentially dangerous device (also referred to herein as a threat risk) is a device **190** whose probability of fraud during online access to banking services **199** (i.e., online banking) is higher than a threshold value. For example, the system **100** may identify devices **190** that are mobile devices, smartphones, or tablet computers with root access; mobile devices, smartphones, personal computers, and notebooks with a high frequency of infection for a certain region; mobile devices, smartphones, personal computers, and notebooks with a high frequency of infection for different regions; and different combinations of potentially dangerous states and clusters of devices **190**.

In one example, the acquisition module **110** is configured to acquire digital fingerprints (also called impressions) of devices **190**. In the general case, the fingerprint contains characteristics of the device **190**. For example, the characteristics of the device **190** may include an identifier of the operating system under whose control the device **190** is running (e.g., version number, serial number). In some examples, the fingerprint associated with the device may indicate a geographical location of the device, for example, using a geolocation of the device 190, or regional characteristics of the firmware of the device **190** (such as continent/country/city). In some examples, the fingerprint associated with the device may include an account identifier (such as the Microsoft®, Google®, or Apple® account identifier). In some examples, the fingerprint associated with the device may indicate information about the state of software executing on the device 190, such as information on whether the device **190** (the software execution environment) is running within a virtual machine or emulator, a web browser application version, plug-ins installed in the browser of the device **190,** vulnerable applications installed on the device **190,** and so forth.

In one example, the acquisition module **110** may be configured to acquire the characteristics by executing (e.g., in the browser on the device **190)** a JavaScript script, wherein said script may be stored on the bank server and executed when the device **190** accesses the bank server. In yet another example, the acquisition module **110** may be configured to acquire the data using security applications (such as an antivirus application). In yet another example, the acquisition module **110** may be configured to acquire the characteristics associated with the device 190 using an application running on the device 190. For example, such an application may be configured to access banking services (such as the application "Sberbank-online") **199** and created with the use of a software development kit (SDK), provided for example by the manufacturer of the antivirus application (such as the Kaspersky Mobile Security SDK).

Besides acquiring the characteristics of the device **190** the acquisition module **110** may be further configured to obtain data related to potentially dangerous states of the device **190**. The term "potentially dangerous states" may refer to states of the device **190** when a safe interaction of the user via the device **190** with the banking services **199** cannot be guaranteed. Examples of such states are given below.

In one example, a potentially dangerous state is the presence on the device **190** of root access, wherein the acquisition module **110** acquires information on the presence of root access on the device **190.** It should be mentioned that even an antivirus application may not identify the activity of malicious software on a device **190** with root access. Therefore, such a state of the device **190** cannot guarantee a safe interaction of the user with the banking services **199** by means of the device **190.**

In yet another example, a potentially dangerous state is an infection on the device **190,** wherein the acquisition module **110** obtains information as to the presence of an infection on the device **190** (for example, the acquisition module discovers the activity of malicious programs). Information as to the infection of the device **190** may be obtained both at the time of the user accessing the banking services **199,** and over the course of a period of time when the user is not yet interacting with the banking services **199** (for example, such information may be acquired by a service of the acquisition module **110** running in the background).

In one example, the acquisition module **110** obtains from the bank or an outside organization information about an attack on banking services **199** carried out from the device **190** (for example, it receives from Kaspersky Laboratory information on attacks on banking services **199** identified with the aid of Kaspersky Fraud Prevention, KFP). In such a case, the fact of the attack is also a potentially dangerous state.

In yet another example, the acquisition module **110** obtains information from the bank or an outside organization as to the device **190** being compromised by any other known suitable method. For example, the acquisition module 110 may receive data on an attack or a compromised system from a security network **150**. The security network **150** may be a cloud-based service that compiles and provides data related to new or past threats, applications' reputation data, websites' reputation data, and other data related to detected threats and suspicious activities. An example of a security network may be the Kaspersky Security Network (KSN) made available by Kaspersky Labs®.

The data acquired by the acquisition module **110** about the device **190** is sent to the threat degree calculating module **120**. In one example, the data acquired by the acquisition module **110** about the device **190** is saved in a database **111**.

The threat degree calculating module **120** may be running on a remote server (or on a distributed system of servers) or as a cloud service and is configured to calculate threat degrees on the basis of the data obtained from the acquisition module **110** or from the database **111**.

The threat degree calculating module **120** calculates the threat degrees (threat factors). The threat degree may be represented as a numerical quantity. In the general case, the threat degree is calculated on the basis of the frequency of occurrence of a potentially dangerous state. The threat degree is higher the more often the potentially dangerous state is encountered. In one example, the threat degree is calculated in the range of 0 (guaranteed safe device) to 1 (guaranteed malicious device).

In one example, the threat degree calculating module **120** creates clusters (performs a clusterization) of devices **190** on the basis of at least one device characteristic obtained when acquiring the fingerprint of the device **190**. In one example, the clusterization is done on the basis of several of the mentioned acquired characteristics of the devices **190**. Thus, the threat degree may be calculated both for an individual device **190** and for a cluster of devices **190**. Moreover, the threat degree may be calculated individually both for each known potentially dangerous state (for example, the frequency of presence of root access on the device **190)**, and for any one of their combinations (for example, the frequency of presence of root access on the device **190** and the frequency of attacks on banking services from the device **190).**

Taking the above into account, it is possible to calculate several threat degrees for each device **190** or cluster of devices **190**. The threat degree for a cluster may be calculated by any known suitable method. In one example, the threat degree of a cluster is one of the measures of the central trend (arithmetic mean) of the threat degrees of all the devices **190** entering into the cluster. In another example, the threat degree of a cluster is calculated as the arithmetic mean of the threat degrees multiplied by a coefficient which is higher the less time has passed since the last known compromise of one of the devices **190**.

In one example, the threat degree calculating module 120 may determine a threat degree to a device **190** based on characteristics associated with the device indicating a particular geographical location and/or other factors associated with higher or lower levels of threat risk. For example, a device **190** with firmware for China, to be used in China, has high threat degrees for root access (installed by default in the firmware by the manufacturer) and for vulnerable applications installed (there are many preinstalled applications in the firmware, for example, advertising and performing backup data copying from the mentioned devices to Chinese servers). The very same device **190** with firmware for China, but used in the USA, has only a high threat degree for root access, since the preinstalled vulnerable applications are not connected to Chinese servers and do not manifest their activity. This same device with firmware for the USA has low threat degrees for root access and preinstalled vulnerable applications, since the firmware does not contain root access and preinstalled vulnerable applications, and only a small number of users independently obtain root access on the device **190** and install the mentioned applications.

In some examples, the threat degree calculating module **120** may ignore clusters with a relatively small threat degree during the analysis of the devices **190**. For example, the threat degree calculating module **120** may ignore a cluster based on a threshold value of multiple times (e.g., 5 times) higher than the threat degree of the cluster. For example, the cluster of devices **190** containing a certain well-regarded application (e.g., Google Chrome®) is not potentially dangerous (such a clustering is too generalized and not amenable to identifying dangerous devices **190,** so it makes no sense to consider such a cluster).

The data calculated by the threat degree calculating module **120** about the device **190** is sent to the analysis module **130**. In one example, the clusters created by the threat degree calculating module **120** and the threat degrees calculated are saved in the database **111**.

The analysis module **130** may be executed on a remote server (or a distributed system of servers) or as a cloud service and is configured to identify potentially dangerous devices on the basis of the data obtained from the threat degree calculating module **120** or from the database **111**.

Among the devices **190** and the clusters created for the devices **190** the analysis module **130** identifies potentially dangerous devices **190,** specifically devices **190** with at least one high threat degree. In the general case, the threat degree is compared to a previously determined threshold value. The threshold value may be obtained automatically on the basis of statistical data or with the involvement of a computer security expert, and also on the basis of data on past incidents from the bank or data on compromised systems from a security network **150.**

In one example, the analysis module **130** identifies the potentially dangerous device **190** that corresponds to at least two clusters of devices with threat degrees greater than a threshold value, each cluster being created on the basis of different characteristics of the devices. Thus, for example, cluster A has a threat degree #1, which is higher than the threshold value, cluster A being obtained by clusterization of characteristic #1. Cluster B has a threat degree #2, which is also higher than the threshold value, cluster B being obtained by clusterization of characteristic #2. The device **190** corresponds to both cluster A and cluster B.

In another example, the analysis module **130** may identify, as potentially dangerous, a device associated with multiple clusters based on the threat degrees of the multiple clusters, even though the threat degrees of the clusters are not individually indicative of a sufficient threat risk. To do so, the analysis module **130** may designate, for each threat degree, a numerical coefficient (weight), and may identify a potentially dangerous device as the arithmetic mean of the threat degrees of the clusters, multiplied by the mentioned coefficients. For example, cluster A has a threat degree #1, which is lower than the threshold value, and coefficient #1, cluster A being obtained by clusterization of characteristic #1. Cluster B has a threat degree #2, which is likewise lower than the threshold value, and a coefficient #2, cluster B being obtained by clusterization of characteristic #2. The device **190** corresponds to both cluster A and cluster B. In this case, it is possible that, as shown by the relationship depicted in Equation (1):

$$\frac{(ThreatDegree_1 * Coeff_1) + (ThreatDegree_2 * Coeff_2)}{2} > threshold, \ (1)$$

that is, a device falling within clusters A and B is potentially dangerous, while the threat degrees of clusters A and B separately do not exceed the threshold value.

Examples of threat risk devices **190** may include mobile devices, smartphones, or tablet computers with root access. That is, the analysis module 130 may conclude that if a cluster of devices **190** associated a particular model of a particular manufacturer contains 70% of devices **190** with root access, this may indicate that the device from the factory has firmware in which root access is present. In another example, threat risk devices may include mobile devices, smartphones, personal computers, and notebooks with a high frequency of infection for a certain region. In this case, the analysis module **130** may conclude that this may indicate that the device **190** from the factory has firmware with embedded malicious software, or the device **190** is being used in a region with no antivirus application installed on it. In another example, the threat risk devices may be comprised of mobile devices, smartphones, personal computers, and notebooks with a high frequency of infection for different regions. It has been determined that this may indicate that the device **190** has a hidden/critical vulnerability making unauthorized access to the device **190** easier than with other devices **190**. It is noted that other different combinations of potentially dangerous states and clusters of devices **190** may be used with embodiments of the present disclosure.

The foregoing remarks make it possible to expand the family of potentially dangerous devices regardless of the manufacturer or the particular model of the devices **190** (for example, all devices **190** of any given manufacturer with any given regional firmware in which there is root access and an application attacking banking services, according to data from a security network **150,** will be assigned to the potentially dangerous category).

In the general case, after identifying potentially dangerous devices **190** by the above-described method, the analysis module **130** notifies the access systems and/or decision making systems (for example, such systems are implemented at the bank side, as bank security services **199**). The fact of attempted access (such as an attempt to get into the system) from a potentially dangerous device **190** does not necessarily indicate an attack, but it may be a risk factor which is processed in the decision making system in a special way (for example, an increased logging level, a two-factor authorization, limited authority, and so on).

In one example, the analysis module **130** may block a transaction being carried out during an interaction with banking services 199 from a potentially dangerous device **190** by any suitable technique.

Moreover, the threat degrees make it possible to assess whether the probability of performing an attack is higher (and how much so) from a given particular device **190** (or from a device **190** having a particular set of characteristics according to which clusters are constructed) than from devices **190** not having those characteristics.

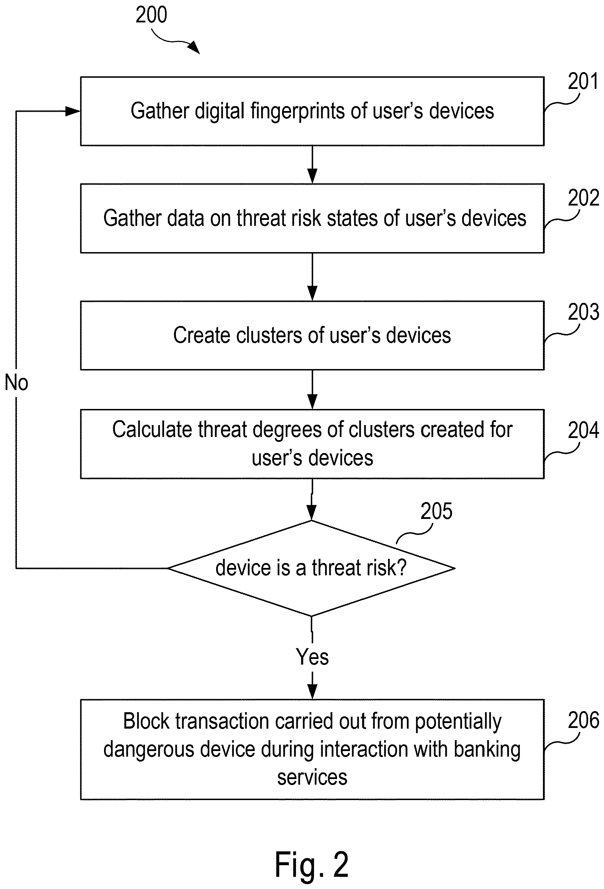

**Fig. 2** is a flowchart illustrating a method **200** for identification of potentially dangerous devices. It is noted that the following description of the exemplary method makes reference to the system and components described above.

In step **201,** the acquisition module **110** is used to acquire the digital fingerprints of a user's devices **190,** wherein the fingerprint contains at least one characteristic of the aforementioned user's device. In some examples, the digital fingerprint of the user device may be acquired in response to detecting an interaction between the user's device **190** and the bank services **199**. The characteristics of the device **190** may include an identifier of the operating system under whose control the device is running, a location of the device, regional characteristics of the firmware of the device. In other examples, the characteristics of the device **190** may include an account identifier (e.g., Google ID or Apple ID), an indication of whether the device is running within a virtual machine or emulator, the browser version, the plug-ins installed in the browser of the device, and any vulnerable applications installed on the device;

In step **202,** the acquisition module **110** may acquire data related to threat risk states of the aforementioned user's device. In one example, a threat risk state may be indicated by the presence of root access on the device **190**. In yet another example, information is acquired on the threat risk states of the user's device **190** from a security network **150**. The data acquired by the acquisition module **110** about the device **190** may be saved in a database **111.**

In step **203,** the threat degree calculating module **120** may generate one or more clusters of the user's devices **190** on the basis of at least one characteristic of the devices obtained during the acquiring of the fingerprint of the device **190**. In some examples, the threat degree calculating module **120** may create a first cluster and a second cluster, wherein the different clusters are generated by clusterization of different characteristics of the user device. For example, one cluster may be based on the regional characteristics of the firmware installed on the respective user devices, while another cluster may be based on the installed web browser version.

In step **204,** the threat degree calculating module **120** may calculate the threat degree associated with each of the created clusters of the user's devices **190**. In some examples, the threat degree may be a numerical quantity proportional to the frequency of occurrence of the potentially dangerous state. In one example, the clusters created by the threat degree calculating module **120** and the calculated threat degrees are saved in the database **111.**

In step **205,** the analysis module **130** may determine whether the user device is a threat risk based on the one or more generated clusters. In some examples, the analysis module **130** may identify a potentially dangerous device **190,** where the potentially dangerous device **190** corresponds to at least two clusters of devices **190** with threat degrees higher than a threshold value, each cluster being created on the basis of different characteristics of devices. In some examples, the analysis module **130** may determine that an average of a first threat (of a first cluster) and a second threat degree (of a second cluster) exceeds the threshold value, even though the first threat degree does not individually exceed the threshold value. In another example, the analysis module **130** may determine that an average of a product of a first threat degree and an associated weight value and a product of a second threat and an associated weight value exceeds the threshold value, for example, as represented by Equation (1) above.

If so, in step **206,** the analysis module **130** may block a transaction being carried out from the threat risk device **190** during an interaction with banking services **199.** Otherwise, the operations may return to step **201** in which the system 100 analysis and acquires data about a given user device **190.**

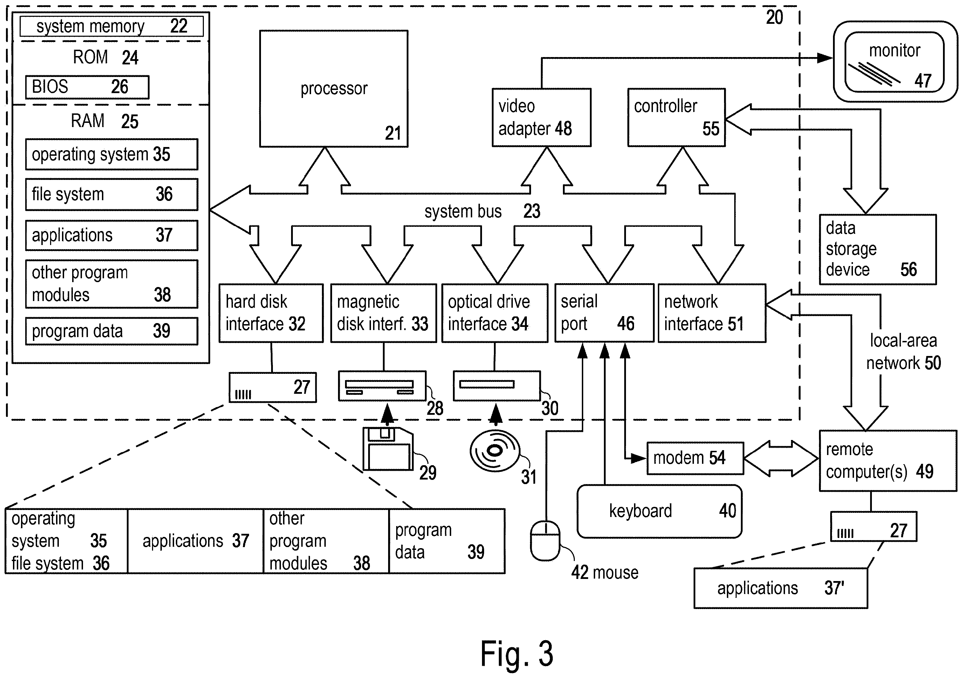

**Fig. 3** is a block diagram illustrating a general-purpose computer system **20** on which systems and methods for identifying potentially dangerous devices during the interaction of a user with banking services may be implemented. It should be noted that the computer system **20** can correspond to a physical server on which the security service **101** may be executing, as well as user devices **190,** for example, described earlier.

As shown, the computer system **20** (which may be a personal computer or a server) includes a central processing unit **21,** a system memory **22,** and a system bus **23** connecting the various system components, including the memory associated with the central processing unit **21.** As will be appreciated by those of ordinary skill in the art, the system bus **23** may comprise a bus memory or bus memory controller, a peripheral bus, and a local bus that is able to interact with any other bus architecture. The system memory may include permanent memory (ROM) **24** and random-access memory (RAM) **25.** The basic input/output system (BIOS) **26** may store the basic procedures for transfer of information between elements of the computer system **20,** such as those at the time of loading the operating system with the use of the ROM **24.**

The computer system **20,** may also comprise a hard disk **27** for reading and writing data, a magnetic disk drive **28** for reading and writing on removable magnetic disks 29, and an optical drive **30** for reading and writing removable optical disks **31,** such as CD-ROM, DVD-ROM and other optical media. The hard disk **27,** the magnetic disk drive **28,** and the optical drive **30** are connected to the system bus **23** across the hard disk interface **32,** the magnetic disk interface **33** and the optical drive interface **34,** respectively. The drives and the corresponding computer information media are power-independent modules for storage of computer instructions, data structures, program modules and other data of the computer system **20.**

An exemplary embodiment comprises a system that uses a hard disk **27,** a removable magnetic disk **29** and a removable optical disk **31** connected to the system bus **23** via the controller **55.** It will be understood by those of ordinary skill in the art that any type of media **56** that is able to store data in a form readable by a computer (solid state drives, flash memory cards, digital disks, random-access memory (RAM) and so on) may also be utilized.

The computer system **20** has a file system **36,** in which the operating system **35,** may be stored, as well as additional program applications **37,** other program modules **38,** and program data **39.** A user of the computer system **20** may enter commands and information using keyboard 40, mouse 42, or any other input device known to those of ordinary skill in the art, such as, but not limited to, a microphone, joystick, game controller, scanner, *etc.* Such input devices typically plug into the computer system **20** through a serial port **46,** which in turn is connected to the system bus, but those of ordinary skill in the art will appreciate that input devices may be also be connected in other ways, such as, without limitation, via a parallel port, a game port, or a universal serial bus (USB). A monitor **47** or other type of display device may also be connected to the system bus **23** across an interface, such as a video adapter **48.** In addition to the monitor **47,** the personal computer may be equipped with other peripheral output devices (not shown), such as loudspeakers, a printer, *etc.*

Computer system **20** may operate in a network environment, using a network connection to one or more remote computers **49.** The remote computer (or computers) **49** may be local computer workstations or servers comprising most or all of the aforementioned elements in describing the nature of a computer system **20.** Other devices may also be present in the computer network, such as, but not limited to, routers, network stations, peer devices or other network nodes.

Network connections can form a local-area computer network (LAN) **50** and a wide-area computer network (WAN). Such networks are used in corporate computer networks and internal company networks, and they generally have access to the Internet. In LAN or WAN networks, the personal computer **20** is connected to the local-area network **50** across a network adapter or network interface **51.** When networks are used, the computer system **20** may employ a modem **54** or other modules well known to those of ordinary skill in the art that enable communications with a wide-area computer network such as the Internet. The modem **54,** which may be an internal or external device, may be connected to the system bus **23** by a serial port **46.** It will be appreciated by those of ordinary skill in the art that said network connections are non-limiting examples of numerous well-understood ways of establishing a connection by one computer to another using communication modules.

In various aspects, the systems and methods described herein may be implemented in hardware, software, firmware, or any combination thereof. If implemented in software, the methods may be stored as one or more instructions or code on a non-transitory computer-readable medium. Computer-readable medium includes data storage. By way of example, and not limitation, such computer-readable medium can comprise RAM, ROM, EEPROM, CD-ROM, Flash memory or other types of electric, magnetic, or optical storage medium, or any other medium that can be used to carry or store desired program code in the form of instructions or data structures and that can be accessed by a processor of a general purpose computer.

In various aspects, the systems and methods described in the present disclosure can be addressed in terms of modules. The term "module" as used herein refers to a real-world device, component, or arrangement of components implemented using hardware, such as by an application specific integrated circuit (ASIC) or field-programmable gate array (FPGA), for example, or as a combination of hardware and software, such as by a microprocessor system and a set of instructions to implement the module's functionality, which (while being executed) transform the microprocessor system into a special-purpose device. A module may also be implemented as a combination of the two, with certain functions facilitated by hardware alone, and other functions facilitated by a combination of hardware and software. In certain implementations, at least a portion, and in some cases, all, of a module may be executed on the processor of a general purpose computer (such as the one described in greater detail in Figure 3, above). Accordingly, each module may be realized in a variety of suitable configurations, and should not be limited to any particular implementation exemplified herein.

In the interest of clarity, not all of the routine features of the aspects are disclosed herein. It would be appreciated that in the development of any actual implementation of the present disclosure, numerous implementation-specific decisions must be made in order to achieve the developer's specific goals, and these specific goals will vary for different implementations and different developers. It is understood that such a development effort might be complex and time-consuming, but would nevertheless be a routine undertaking of engineering for those of ordinary skill in the art, having the benefit of this disclosure.

Furthermore, it is to be understood that the phraseology or terminology used herein is for the purpose of description and not of restriction, such that the terminology or phraseology of the present specification is to be interpreted by the skilled in the art in light of the teachings and guidance presented herein, in combination with the knowledge of the skilled in the relevant art(s). Moreover, it is not intended for any term in the specification or claims to be ascribed an uncommon or special meaning unless explicitly set forth as such.

The various aspects disclosed herein encompass present and future known equivalents to the known modules referred to herein by way of illustration. Moreover, while aspects and applications have been shown and described, it would be apparent to those skilled in the art having the benefit of this disclosure that many more modifications than mentioned above are possible without departing from the inventive concepts disclosed herein.

**Claims**

1. A method for identifying potentially dangerous devices during the interaction of a user with banking services, wherein the method comprises:

   responsive to detecting an interaction between a user device and banking services, acquiring a digital fingerprint associated with the user device, wherein the digital fingerprint indicates at least one characteristic of the user device;
   generating one or more clusters associated with the user device based on the at least one characteristic of the user device, wherein each cluster is associated with a corresponding threat degree; and
   responsive to determining that the user device is a threat risk based on the one or more generated clusters, blocking a transaction being carried out between the user device and the banking services during the interaction.

2. The method according to claim 1, further comprising:

   acquiring data related to threat risk states associated with the user device.

3. The method according to any of claims 1 to 2, further comprising:

   calculating each threat degree associated with a corresponding cluster of the one or more clusters, wherein each threat degree indicates a numerical quantity proportional to a frequency of occurrence of a threat risk state.

4. The method according to any of claims 1 to 3, wherein determining that the user device is a threat risk based on the one or more generated clusters further comprises:

   determining that the user device is associated with at least two clusters with threat degrees exceeding a threshold value.

5. The method according to any of claims 1 to 4, wherein determining that the user device is a threat risk based on the one or more generated clusters further comprises:

determining a first threat degree of a first cluster of the generated clusters;
determining a second threat degree of a second cluster of the generated clusters; and
determining that an average of the first and second threat degrees exceeds the threshold value, wherein the first threat degree does not individually exceed the threshold value.

6. The method according to claim 5, wherein the first and second clusters are generated by clusterization of different characteristics of the user device.

7. The method according to any of claims 1 to 6, wherein determining that the user device is a threat risk based on the one or more generated clusters further comprises:

   determining that an average of a product of a first threat degree and an associated weight value and a product of a second threat and an associated weight value exceeds the threshold value.

8. A system for identifying potentially dangerous devices during the interaction of a user with banking services, wherein the system comprises:

   a storage device for storing a database; and
   a hardware processor configured to:

   responsive to detecting an interaction between a user device and banking services, acquire a digital fingerprint associated with the user device, wherein the digital fingerprint indicates at least one characteristic of the user device;
   generate one or more clusters associated with the user device based on the at least one characteristic of the user device, wherein each cluster is associated with a corresponding threat degree; and
   responsive to determining that the user device is a threat risk based on the one or more generated clusters, block a transaction being carried out between the user device and the banking services during the interaction.

9. The system according to claim 8, wherein the generated clusters and associated threat degrees are stored in the database.

10. The system according to any of claims 8 to 9, wherein the processor is further configured to:

    calculate each threat degree associated with a corresponding cluster of the one or more clusters, wherein each threat degree indicates a numerical quantity proportional to a frequency of occurrence of a threat risk state.

11. The system according to any of claims 8 to 10, wherein the processor is configured to determine that the user device is a threat risk based on the one or more generated clusters is further configured to:

    determine that the user device is associated with at least two clusters with threat degrees exceeding a threshold value.

12. The system according to any of claims 8 to 11, wherein the processor is configured to determine that the user device is a threat risk based on the one or more generated clusters is further configured to:

    determine a first threat degree of a first cluster of the generated clusters;
    determine a second threat degree of a second cluster of the generated clusters; and
    determine that an average of the first and second threat degrees exceeds the threshold value, wherein the first threat degree does not individually exceed the threshold value.

13. The system according to claim 12, wherein the first and second clusters are generated by clusterization of different characteristics of the user device.

14. The system according to any of claims 8 to 13, wherein the processor is configured to determine that the user device is a threat risk based on the one or more generated clusters is further configured to:

    determine that an average of a product of a first threat degree and an associated weight value and a product of a second threat and an associated weight value exceeds the threshold value.

**Fig. 1**

200

Gather digital fingerprints of user's devices — 201

Gather data on threat risk states of user's devices — 202

Create clusters of user's devices — 203

Calculate threat degrees of clusters created for user's devices — 204

205

device is a threat risk?

No

Yes

Block transaction carried out from potentially dangerous device during interaction with banking services — 206

## Fig. 2

Fig. 3

**EP 3 441 930 A1**

**EUROPEAN SEARCH REPORT**

Application Number

EP 17 19 7385

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | The claimed subject-matter, with due regard to the description and drawings in accordance with Art. 92 EPC, relates to processes comprised in the list of subject-matter and activities excluded from patentability under Art. 52(2) and (3) EPC. The information technology employed as an enabler for carrying out said processes is so well-known that its existence at the relevant date cannot reasonably be disputed. The claimed technical features, namely client and server computers interconnected over a telecommunication network, databases,are therefore considered to be part of the notorious knowledge, for which no documentary evidence is deemed necessary. (see Guidelines for Examination in the European Patent Office, B-VIII, 2.2.1) ----- | | INV. G06Q40/02 G06Q20/10 G06Q10/06 |
| | | | TECHNICAL FIELDS SEARCHED (IPC) |
| | | | G06Q |

The present search report has been drawn up for all claims

| Place of search | Date of completion of the search | Examiner |
|---|---|---|
| The Hague | 30 November 2017 | Marcu, Antoniu |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)